# EUROPÄISCHE PATENTSCHRIFT

(11) **EP 4 040 921 B1**
(45) Veröffentlichungstag und Bekanntmachung des Hinweises auf die Patenterteilung: **02.04.2025**
(21) Anmeldenummer: 22164853.8
(22) Anmeldetag: 16.06.2019
(51) Int. Cl.: H05B 47/18, H05B 47/165, H05B 47/21, H04L 12/403, G06F 13/00, H04B 3/02

(54) **SEGMENTIERTE STEUERUNGSANORDNUNG**
SEGMENTED CONTROL ARRANGEMENT
AGENCEMENT SEGMENTÉ DE COMMANDE

(30) Priorität: 10.09.2018 DE 102018007141
(43) Veröffentlichungstag der Anmeldung: 10.08.2022
(62) Teilanmeldung aus: 19734249.6
(73) Patentinhaber: INOVA Semiconductors GmbH, 81379 München (DE)
(72) Erfinder: Neumann, Roland, 81671 München (DE)
(74) Vertreter: Reich, Jochen

(56) Entgegenhaltungen:
- EP-A1- 2 663 028
- DE-U1- 202016 008 325
- US-A1- 2004 160 199
- US-A1- 2010 188 972
- US-A1- 2011 309 746
- US-B1- 8 492 983

## Beschreibung

Die vorliegende Erfindung ist auf eine Systemanordnung zum fehlertoleranten Ansteuern einer Vielzahl von Ausführungseinheiten gerichtet. Hierbei erlaubt es die vorliegende Erfindung in vorteilhafter Weise, Ausführungseinheiten derart anzusteuern, dass unter anderem sowohl eine hohe sogenannte Common-Mode-Festigkeit erreicht wird als auch eine hohe Ausfallsicherheit selbst bei einer großen Anzahl von Ausführungseinheiten. Darüber hinaus ist die vorliegende Erfindung auf ein Verfahren gerichtet, welches dem Betreiben bzw. dem Herstellen der vorgeschlagenen Systemanordnung dient. Darüber hinaus wird ein Computerprogrammprodukt mit Steuerbefehlen vorgeschlagen, welche das Verfahren ausführen bzw. die Vorrichtung betreiben.

WO 2017/162 323 A1 zeigt eine effiziente Steuerungsanordnung und ein Steuerungsverfahren, wobei sequentiell angeordnete Ausführungseinheiten mittels einer Befehlseinheit angesteuert werden.

WO 2018/103 880 A1 zeigt eine kompakte Leuchtdiodenanordnung, welche generisch einsetzbar ist, jedoch aufgrund der kompakten Bauart insbesondere für die Verwendung in einem Fahrzeug vorteilhaft ist.

WO 2017/153 026 A1 zeigt ein Verfahren zur Helligkeitskompensation in mindestens einer Leuchtdiode.

DE 20 2013 103146 U1 zeigt ein Gerätesystem mit mehreren Geräten zur verteilten Anordnung entlang Rettungswegen oder Verkehrswegen.

US 2014/333 207 A1 zeigt ein Protokoll zum Austausch von Statusnachrichten in einem Beleuchtungssystem.

US 8,492,983 B1 zeigt Verfahren und Systeme zum Ansteuern von Leuchteinheiten.

US 2004/160199 A1 zeigt Leuchtanordnungen und insbesondere lineare Leuchtanordnung sowie deren Konfiguration.

DE 10 2016 125 290 A1 zeigt Verfahren und eine Vorrichtung zur verketteten Steuerung und/ oder zur Programmierung mehrerer integrierter Schaltungen.

US 2010/ 0188972 A1 zeigt ein Kommunikationssystem mit Ringtopologie.

EP 2 663 028 A1 zeigt ein Kommunikationssystem, welches aufgrund einer Fehlerleitung eine Fehlertoleranz erhöht.

US 2011/0309746 A1 zeigt eine Systemanordnung mit Leuchtdioden zur Verwendung in einem Automobil.

DE 20 2016 008 325 U1 zeigt ein Kommunikationssystem mit einer Befehlseinheit und mehreren Steuereinheiten.

Gemäß herkömmlicher Verfahren ist eine Vielzahl von Möglichkeiten bekannt, Steuereinheiten, welche seriell geschaltet sind, anzusprechen. Hierbei gibt es generische Ansätze, welche jedoch in spezifischen Anwendungsszenarien nachteilig sein können oder aber auch sehr spezielle Ansätze, welche nunmehr nicht mehr in generischer Weise einsetzbar sind. Bekannt ist beispielsweise der sogenannte CAN-Bus, welcher bezüglich Kabelbäume entwickelt wurde und insbesondere eine Vernetzung von Steuergeräten umsetzen soll.

Allgemein ist die Komplexität des CAN Protokolls deutlich größer als bei ISELED (eingetragene Marke) und damit teurer. Aber der gewichtigste Nachteil von CAN und LIN ist, dass diese auf Grund der Busarchitektur keine natürliche (automatische) Adressierungsmöglichkeit bieten. Hier muss die Adresse konfiguriert werden. Bei ISELED (Ausführungseinheiten) und auch bei der segmentierten ISELED (Leitungstreibereinheit und Ausführungseinheiten) gibt es eine physikalisch vorgegebene Reihung und daraus folgt die eine Möglichkeit automatisch Adressen zu vergeben.

Aus dem Stand der Technik sind unterschiedliche Ausführungseinheiten bekannt, welche typischerweise als ein sogenannter Slave bzw. ein Client arbeiten und hierbei von einer übergeordneten Instanz, welche typischerweise als Master bezeichnet wird, Befehle erhalten. Die Ausführungseinheiten setzen diese Befehle sodann um. Der Stand der Technik zeigt hierzu unterschiedliche Architekturen bzw. Topologien, wie entsprechende Ausführungseinheiten mitsamt deren Steuerungseinheiten anzuordnen sind.

Der Stand der Technik weist hierbei jedoch das Problem auf, dass je nach Anwendungsszenario unterschiedliche Anforderungen gestellt werden und insgesamt also abzuwägen ist, ob ein energieeffizientes Verfahren mit höherer Störanfälligkeit bereitzustellen ist, oder aber ein Verfahren, welches mehr Energie aufnimmt, dafür jedoch fehlerrobuster ist. Darüber hinaus sind die Abmessungen des vorgesehenen Einsatzortes einer solchen Architektur zu berücksichtigen. Manche Anordnungen eignen sich nicht für einen großflächigen Einsatz und können daher lediglich auf einzelnen Leiterplatten implementiert werden. Andere Architekturen hingegen können großflächig über mehrere Meter hinweg verbaut werden und haben folglich ganz andere Anforderungen zu erfüllen als Systemanordnungen auf einzelnen Leiterplatten.

Der Stand der Technik thematisiert darüber hinaus das Problem der sogenannten elektromagnetischen Verträglichkeit EMV. So kann es zu Störungen kommen, welche entweder von Anfang an unterbunden werden oder aber auch im Nachhinein bereinigt werden. Darüber hinaus können Störungen dadurch auftreten, dass einzelne Komponenten aufgrund von Krafteinwirkung oder Hitzeeinwirkung ausfallen und somit Folgeausfälle mit sich führen. Dies ist insbesondere dann ein Problem, falls Einheiten in Serie geschaltet werden und eine Einheit jeweils Befehle von ihrem Vorgänger erhält. So kann es bei einem sogenannten Daisy Chaining dann zu Problemen kommen, wenn einzelne Komponenten bei einem Ausfall nicht durchgeschaltet werden. Somit wird die dahinterliegende Teilkette vom Kommunikationsfluss abgeschottet und fällt folglich aus. Ganz spezielle Anforderungen bestehen zudem bei einer Systemanordnung, welche in einem Automobil verbaut werden soll. Bei einem Automobil handelt es sich generell um ein hochpreisiges Produkt, auf das der Kunde stets angewiesen ist. Folglich wird seitens des Kunden keine hohe Fehleranfälligkeit toleriert und zudem sind anzusteuernde Komponenten oftmals sicherheitsrelevant. Hierbei spielt die Fehleranfälligkeit eine übergeordnete Rolle, da der Kunde nur in Ausnahmesituationen einen Kundendienst in Anspruch nehmen will und zudem die Funktionalität von sicherheitskritischen Einheiten gewährleistet sein muss.

Es ist folglich eine Aufgabe der vorliegenden Erfindung, eine Systemanordnung zur Ansteuerung von Ausführungseinheiten bereitzustellen, welche im weitesten Sinne fehlertolerant ist und zudem mit geringem technischen Aufwand bereitgestellt werden kann. Bezüglich der Fehlertoleranz wird insbesondere auf die elektromagnetische Verträglichkeit sowie auf die Ausfallsicherheit abgestellt. Zudem ist es eine Aufgabe der vorliegenden Erfindung, ein Verfahren zum Bereitstellen bzw. zum Betreiben der vorgeschlagenen Systemanordnung vorzuschlagen.

Die Aufgabe wird gelöst mit den Merkmalen der unabhängigen Ansprüche 1 und Weitere vorteilhafte Ausgestaltungen sind in den Unteransprüchen angegeben.

Demgemäß wird eine Systemanordnung zum fehlertoleranten Ansteuern einer Vielzahl von Ausführungseinheiten der Systemanordnung vorgeschlagen, aufweisend eine Befehlseinheit, wobei die Vielzahl von Ausführungseinheiten in eine Mehrzahl von jeweils seriellen Teilketten, wobei jede Teilkette mindestens eine Ausführungseinheit entlang einer ersten Datenleitung aufweist, segmentiert ist und jeweils jeder Teilkette eine Leitungstreibereinheit vorgeschaltet ist und die Leitungstreibereinheiten mittels einer zweiten Datenleitung untereinander seriell kommunikativ gekoppelt sind und die erste in Serie geschaltete Leitungstreibereinheit mittels der zweiten Datenleitung mit der Befehlseinheit kommunikativ gekoppelt ist, wobei die Systemanordnung eingerichtet ist Signale auf der zweiten Datenleitung mit einer 10-fach größeren Amplitude zu modulieren als Signale auf der ersten Datenleitung.

Die vorgeschlagene Erfindung schafft unter anderem den Vorteil, dass zur Erhöhung der systemweiten Fehlertoleranz die vorgeschlagene Segmentierung weiterhin eine automatische Adressvergabe ermöglicht. Diesen Vorteil schafft weder CAN noch LIN. Erfindungsgemäß ergibt die Vielzahl von Ausführungseinheiten, welcher segmentweise nur jeweils eine Leitungstreibereinheit vorgeschaltet ist, ein positives Verhältnis zwischen der Anzahl von Ausführungseinheiten zu der Anzahl der Leitungstreibereinheiten. Dies ermöglicht eine automatische Adressierbarkeit, im Gegensatz zu CAN/LIN, bei maximaler Fehlertoleranz und minimaler Komplexität aufgrund des einfachen Protokolls. Die serielle Anordnung ermöglicht automatische Adressierbarkeit bzw. Adressvergabe, so dass die Ausführungseinheiten jeweils mittels einer eigenen Adresse ansprechbar sind.

Die Befehlseinheit sendet als Master Kommandos. Ein Kommando beinhaltet beispielsweise einen Befehl, also was zu tun ist z.B.: "setze Pulsweitenmodulation PWM roter Kanal"), und optional einen Parameter (z.B. = 255) und vorzugsweise eine Adresse. Diese Adresse adressiert eine oder mehrere Ausführungseinheiten. Die Ausführungseinheiten besitzen eine eindeutige Adresse, welche sich aus ihrer physischen Lage automatisch ableitet.

Somit besteht die Möglichkeit einen Verfahrensschritt vorzusehen, der ein automatisches Zuweisen jeweils einer Adresse an jede der Ausführungseinheiten in Abhängigkeit der physischen Anordnung der jeweiligen Ausführungseinheiten innerhalb der vorgeschlagenen Systemanordnung, bewerkstelligt. Die physische Anordnung kann hierbei berücksichtigen in welcher Teilkette die jeweilige Ausführungseinheit angeordnet ist. Dies kann berücksichtigen, welche Leitungstreibereinheit der jeweiligen Ausführungseinheit vorgeschaltet ist.

Die Kommandos werden typischerweise durch alle Leitungstreibereinheiten an alle Ausführungseinheiten verteilt. Es kann eine Filterung oder Bearbeitung in den Leitungstreibereinheiten somit entfallen. Die Ausführungseinheiten entscheiden dann gemäß ihrer eigenen Adresse und der im Kommando enthaltenen Adresse ob sie den Befehl ausführen oder nicht. Typischerweise führen sie jeweils den Befehl aus, falls sie selbst mittels der Adresse angesprochen werden.

Hierbei erlaubt es die vorliegende Erfindung in vorteilhafter Weise, Ausführungseinheiten derart anzusteuern, dass sowohl eine hohe sogenannte Common-Mode-Festigkeit erreicht wird als auch eine hohe Ausfallsicherheit selbst bei einer großen Anzahl von Ausführungseinheiten. Es ergibt sich auch die Möglichkeit Leitungstreiber einzusetzen, die z.B für optische oder differentiell elektrische physikalische Medien optimal sind. Es wird durch die Segmentierung eine geringe Anzahl von Leitungstreibereinheiten benötigt, im Vergleich zur Gesamtzahl der Ausführungseinheiten, so dass hier mit mehr Strom/Leistungsverbrauch und höherer Komplexität des Chips gearbeitet werden kann, als bei den Ausführungseinheiten.

Vorgeschlagen wird somit eine Alternative zu Bus-Lösungen wie CAN/LIN, welche unter anderem das beschriebene Problem der fehlenden automatischen Adressierung löst. Die Segmentierung mit Hilfe von Leitungstreibereinheiten, die Möglichkeit des passiven Durchschaltens und die Optimierung des Physical Layer (Common Mode und elektrisch differentiell oder optisch) lösen nun das Problem der Störanfälligkeit.

Die vorgeschlagene Systemanordnung ist u. a. fehlertolerant, da die Ausführungseinheiten segmentiert werden und folglich in Teilketten angeordnet werden. Somit entstehen also serielle Teilketten, wobei die einzelnen Ausführungseinheiten hintereinandergeschaltet werden. Somit kommt es bei einem Ausfall einer Ausführungseinheit lediglich zu Beeinträchtigungen innerhalb derjenigen Teilkette, in der die ausfallende Ausführungseinheit angeordnet ist. Dies bietet gegenüber dem Stand der Technik den Vorteil, dass nicht eine Vielzahl von weiterer in Serie geschalteter Ausführungseinheiten ausfällt, sondern lediglich fallen Ausführungseinheiten in dem gleichen Segment aus. Dem kann auch dadurch beigekommen werden, dass im Fall eines Ausfallens die Ausführungseinheiten lediglich durchgeschaltet werden.

Die Ausführungseinheiten sind seriell gekoppelt, was vorzugsweise bidirektional erfolgt. So ist es möglich, dass die Ausführungseinheiten von der Leitungstreibereinheit Befehle übermittelt bekommen und diese sodann umsetzen. Ein Befehl kann eine Anweisung sein oder aber auch ein Auslesen oder ein Setzen eines Parameters. So können die Ausführungseinheiten als Leuchtdiodeneinheiten vorgesehen sein, welche einzelne Leuchtdioden ansteuern. Leuchtdioden liegen typischerweise als rote, grüne und blaue Leuchtdioden vor, wobei auch eine weiße Leuchtdiode vorzusehen sein kann. Die Ausführungseinheiten setzten folglich die Befehle der Leitungstreibereinheit um und sind zudem in der Lage, einen Rückwert bereitzustellen. So ist es möglich, dass die Leitungstreibereinheit die Ausführungseinheit anweist, einen Sensor auszulesen, und mittels der bidirektionalen Kommunikation kann die Ausführungseinheit einen ausgelesenen Temperaturwert des Sensors zurückgeben.

Da erfindungsgemäß mehrere Teilketten bzw. Segmente vorliegen, beeinträchtigt also ein Fehler nicht, wie es der Stand der Technik zeigt die gesamte Teilkette, und erfindungsgemäß auch nicht alle Teilketten, sondern nur eine (die betroffene) Teilkette, sondern vielmehr wird die Ausfallsicherheit dadurch erhöht, dass separate und einzeln anzusteuernde Teilketten gebildet werden. In einer nicht abschließenden Aufzählung enthalten die Teilketten mindestens eine Ausführungseinheit, wobei jeder Teilkette eine Leitungstreibereinheit vorgeschaltet ist. Auch wird die Fehlertoleranz dadurch gewährleistet, dass die Leitungstreibereinheiten im Fall eines inaktiven Zustands Signale durchleiten. Ein Durchleiten beschreibt generell das Weiterreichen von Signalen, ohne diese zu verarbeiten. Folglich wird innerhalb des ausgefallenen Elements keinerlei Logik umgesetzt bzw. Verarbeitungsschritte durchgeführt. Vielmehr wird ein Signal, welches an einem Eingang vorliegt, ohne jegliche Verarbeitung an dem Ausgang wieder ausgegeben.

Die elektromagnetische Verträglichkeit bei dem Ansteuern einer Vielzahl von Ausführungseinheiten kann u. a. dadurch herbeigeführt werden, dass stets eine differenzielle Modulation vorgesehen wird, das heißt die Leitung wird auch aktiv getrieben wenn kein Kommando übertragen wird. Hierdurch wird auf eine steile Flanke, die beim An- und Abschalten des Leitungstreibers entsteht verzichtet. Erfindungsgemäß ist es möglich, die vorgeschlagene Topologie derart umzusetzen, dass mindestens zwischen den Leitungstreibereinheiten eine Kabelverbindung (optisch oder elektrisch differentiell) hergestellt wird. Folglich wird also die Datenleitung nicht wie herkömmlich auf einer Leiterplatte implementiert, sondern lediglich werden die einzelnen Teilketten auf einer Leiterplatte angeordnet, und die resultierenden Leiterplatten können mittels einer Kabelverbindung (optisch oder elektrisch differentiell) über die jeweilige Leitungstreibereinheit kommunikativ gekoppelt werden. Somit ist es besonders vorteilhaft, dass die Anzahl der Teilketten deshalb skaliert, da eine beliebige Anzahl von Leitungstreibereinheiten in Serie geschaltet werden kann und an jeder Leitungstreibereinheit eine Teilkette von Ausführungseinheiten kommunikativ angeordnet bzw. gekoppelt ist.

Generell ist die Anzahl der zu betreibenden Ausführungseinheiten bzw. der Leitungstreibereinheiten durch den Adressraum beschränkt, also diejenige Anzahl an Einheiten, welche angesprochen werden kann. Da der Adressraum beliebig gewählt werden kann, skaliert also auch die Anzahl der zu verbauenden Einheiten.

Die vorgeschlagene Systemanordnung sieht u. a. auch eine Befehlseinheit vor, welche letztendlich die einzelnen Ausführungseinheiten steuert. Dies erfolgt typischerweise nicht direkt, sondern über die Leitungstreibereinheiten. So generiert die Befehlseinheit Befehle und übermittelt diese über die jeweiligen Leitungstreibereinheiten an die Ausführungseinheiten bzw. empfängt Parameter und Werte über die Leitungstreibereinheiten von den Ausführungseinheiten. Somit stellt die Befehlseinheit bezüglich der Leitungstreibereinheiten eine übergeordnete Instanz dar und kann folglich als Master-Einheit bezeichnet werden. In diesem Falle verhalten sich die Leitungstreibereinheiten als Slave-Einheiten bzw. Client-Einheiten. Da die Leitungstreibereinheiten den Teilketten, also den Ausführungseinheiten, vorgeschaltet sind und die Leitungstreibereinheiten den jeweiligen Teilketten die Befehle übermitteln, verhalten sich die Leitungstreibereinheiten in diesem Aspekt wie Master-Einheiten gegenüber den Ausführungseinheiten. Die Ausführungseinheiten übernehmen sodann die Rolle der Slave-Einheit bzw. Client-Einheit.

Beispielsweise liegt die vorgeschlagene Systemanordnung als eine Leuchtdiodenkette vor. Hierzu gibt die Befehlseinheit ein bestimmtes Muster aus, welches mittels der einzelnen Leuchtdioden umgesetzt werden soll. Hierzu steuert die Befehlseinheit die einzelnen Leitungstreibereinheiten an, welche sodann den Befehl an die jeweilige Teilkette weiterreichen. Die Leitungstreibereinheiten können nicht nur den Befehl weiterreichen, sondern den Befehl auch eigenständig adaptieren. Die einzelnen Ausführungseinheiten setzen den Befehl letztendlich um und steuern beispielsweise einzelne Leuchtdioden an. Hierbei kann es sich wiederum um die Leuchtdioden Rot, Grün und Blau handeln, wobei auch optional eine weiße Leuchtdiode vorgesehen sein kann. Die Ausführungseinheiten können auch als andere Aktoren wie Motoren, MatrixLEDs, Sensoren, Temperatursensoren, Lichtsensoren oder Taster vorliegen.

Bei der ersten Datenleitung handelt es sich um diejenige Datenleitung, welche Teilketten ausbilden. So verbindet die erste Datenleitung die einzelnen Ausführungseinheiten und schließt diese Kette von Ausführungseinheiten an genau eine Leitungstreibereinheit an. Somit umfasst die Datenleitung zuerst eine Leitungstreibereinheit, woran eine Ausführungseinheit angeschlossen ist. Optional sind an diese Ausführungseinheit weitere Ausführungseinheiten seriell angeschlossen. Bei der Anzahl der Ausführungseinheiten besteht wiederum keinerlei Einschränkung, sondern lediglich wird der zugrundeliegende Adressraum entsprechend gewählt. Hierbei muss der Adressraum nicht völlig ausgeschöpft werden, sondern vielmehr stellt der Adressraum lediglich eine obere Grenze für die Anzahl der zu verbauenden Ausführungseinheiten dar.

Die zweite Datenleitung verbindet die Leitungstreibereinheiten untereinander seriell und vorzugsweise bidirektional. Als erste Einheit ist die Befehlseinheit an die zweite Datenleitung angeschlossen, und sodann folgt mindestens eine Leitungstreibereinheit.

Da die einzelnen Teilketten über eine eigene Datenleitung verfügen, kann bei der ersten Datenleitung von einer Datenleitung gemäß eines ersten Typs gesprochen werden. Generell liegen so viele erste Datenleitungen vor, wie es Teilketten gibt. Liegen beispielsweise drei Teilketten vor, so werden genau drei Leitungstreibereinheiten verbaut und es werden drei Teilketten gebildet, wobei innerhalb jeder Teilkette eine Datenleitung vom ersten Typ vorliegt. Folglich gibt es also in diesem Fall genau drei erste Datenleitungen. Die Unterscheidung zwischen erster und zweiter Datenleitung ermöglicht es, dass die jeweils ersten Datenleitungen anders ausgestaltet werden als die zweite Datenleitung, welche lediglich typischerweise einmal vorliegt. So kann die erste Datenleitung jeweils auf einer Leiterplatte angeordnet werden und die zweite Datenleitung kann beispielsweise als ein Kabel vorliegen. Somit ergibt sich in besonders vorteilhafter Weise ein flexibler Aufbau, der insbesondere auf das Anwendungsszenario im Automobil abstellt.

Gemäß einem Aspekt der vorliegenden Erfindung agiert die einer Teilkette vorgeschaltete Leitungstreibereinheit für die mindestens eine Ausführungseinheit dieser Teilkette als Master-Einheit, und die mindestens eine Ausführungseinheit agiert bezüglich dieser Leitungstreibereinheit als Slave-Einheit. Dies hat den Vorteil, dass die Ausführungseinheiten Befehle von der Leitungstreibereinheit erhalten können und die Befehle sodann durch die Ausführungseinheiten hindurchgeleitet werden bzw. ausgeführt werden. So stellt die Leitungstreibereinheit einen Befehl bereit, der durch die Teilkette geleitet wird und von jeder Ausführungseinheit ausgeführt und weitergereicht wird. Darüber hinaus ist es auch möglich, mittels einer Adresse eine einzelne Ausführungseinheit anzusprechen, so dass der entsprechende Befehl von der Leitungstreibereinheit an diese eine spezielle Ausführungseinheit durch die Kette hindurch adressiert wird. Wurde der Befehl ausgeführt, so ist es auch möglich, ein Ergebnis von der jeweiligen Ausführungseinheit an die vorausgehende Ausführungseinheit zurück zu übermitteln und sodann das Endergebnis an die Leitungstreibereinheit bereitzustellen. Für diesen Fall ist eine bidirektionale Kommunikation innerhalb der Teilkette vorteilhaft. Der Befehl wird vorteilhafterweise von der Befehlseinheit ausgegebenen und über die Leitungstreibereinheiten jeweils an die Ausführungseinheiten typischerweise unverändert weitergegeben.

Gemäß einem weiteren Aspekt der vorliegenden Erfindung agiert die Befehlseinheit für die Leitungstreibereinheiten als Master-Einheit, und die Leitungstreibereinheiten bezüglich der Befehlseinheit als Slave-Einheit. Dies hat den Vorteil, dass ein einzelner Befehl bzw. eine Folge von Befehlen von der Befehlseinheit erstellt und an die Leitungstreibereinheiten übermittelt werden kann. Die Leitungstreibereinheiten empfangen somit diesen Befehl bzw. diese Befehle und leiten diese ggf. unverändert oder angepasst an die Ausführungseinheiten. Auch hier ist es möglich, dass die Leitungstreibereinheiten mittels einer Adresse einzeln angesprochen werden und ggf. auch Rückwerte an die Befehlseinheit ausgeben.

Gemäß einem weiteren Aspekt der vorliegenden Erfindung sind die erste Datenleitung und/oder die zweite Datenleitung bidirektional ausgestaltet. Dies hat den Vorteil, dass Befehle bzw. Signale in beide Richtungen übermittelt werden, und folglich auch sowohl die Ausführungseinheiten Rückgabewerte an die Leitungstreibereinheiten übersenden können, als auch die Leitungstreibereinheiten Signale an die Befehlseinheit übersenden können. Insbesondere können die einzelnen Einheiten untereinander kommunizieren. Vorzugsweise werden beide Datenleitungen bidirektional ausgestaltet, wobei es auch möglich ist, dass nur die erste Datenleitung bidirektional ist oder die zweite Datenleitung. Da mehrere Datenleitungen vom ersten Typ vorliegen, ist es auch möglich, dass die einzelnen ersten Datenleitungen unterschiedlich ausgestaltet werden. Typischerweise werden jedoch alle ersten Datenleitungen gleich ausgestaltet.

Gemäß einem weiteren Aspekt der vorliegenden Erfindung werden Signale auf der zweiten Datenleitung mit einer größeren Amplitude moduliert als Signale auf der ersten Datenleitung. Dies hat den Vorteil, dass mittels der zweiten Datenleitung größere Strecken fehlerfrei überwunden werden können. Eine höhere Amplitude stellt daraufhin ab, dass die Unterscheidung zwischen Null und Eins deutlicher ist, die Signalmodulierung also weniger fehleranfällig ist. So ist es möglich, die erste Datenleitung auf einer Leiterplatte zu implementieren und die zweite Datenleitung mittels einer Kabelleitung zu implementieren, die sodann auch aufgrund der größeren Entfernung entsprechend mit einer größeren Amplitude moduliert wird.

Gemäß einem weiteren Aspekt der vorliegenden Erfindung werden Signale auf der zweiten Datenleitung mit einer 10-fach größeren Amplitude moduliert als Signale auf der ersten Datenleitung. Dies hat den Vorteil, dass überraschenderweise dieser Wert besonders vorteilhaft ist und die Signale auf der ersten Datenleitung besonders effizient moduliert werden können und die Signale auf der zweiten Datenleitung zwar weniger effizient moduliert werden, dafür aber deutlich fehlerrobuster. Überraschenderweise wurde erfindungsgemäß erkannt, dass sich genau der vorgeschlagene Wert besonders gut eignet, um das Verhältnis der Amplitude der zweiten Datenleitung zur ersten Datenleitung festzulegen.

Gemäß einem weiteren Aspekt der vorliegenden Erfindung ist die erste Datenleitung und/oder die zweite Datenleitung eine optische oder eine elektrische Datenleitung. Dies hat den Vorteil, dass mehrere Optionen angeboten werden können, welche wiederum in Abhängigkeit des Anwendungsszenarios ausgewählt werden können. Erfindungsgemäß wird vorzugsweise eine elektrische Datenleitung implementiert.

Gemäß einem weiteren Aspekt der vorliegenden Erfindung ist die erste Datenleitung und/oder die zweite Datenleitung eine elektrische Datenleitung, welche stets Strom führt. Dies hat den Vorteil, dass immer differenziell gesendet werden kann, und folglich gibt es auch keine Nachteile einer besonders steilen Flanke, während der Strom angelegt wird. Vielmehr liegt stets ein Strom vor und das Einschwingen wird verhindert. Somit ist das vorgeschlagene Verfahren auch bezüglich einer elektromagnetischen Störung unempfindlich. Darüber hinaus ist es vorteilhaft, eine solche Ausgestaltung zu wählen, da eine Kabelverbindung implementiert werden kann, welche größere Entfernungen von mehreren Metern überwinden muss.

Gemäß einem weiteren Aspekt der vorliegenden Erfindung ist jeweils eine Leitungstreibereinheit mitsamt einer Teilkette auf einer eigenen Leiterplatte angeordnet. Dies bietet den Vorteil, dass die Leitungstreibereinheiten mitsamt den Ausführungseinheiten und der jeweils ersten Datenleitung für kurze Entfernungen optimiert werden können und folglich eben auch auf einer einzelnen Leiterplatte angeordnet werden können. Somit wird auch die Fehleranfälligkeit reduziert, da die Ausführungseinheiten segmentiert werden, und mittels Leiterplatten werden einzelne Teilketten gesondert angesprochen.

Gemäß einem weiteren Aspekt der vorliegenden Erfindung sind die Leitungstreibereinheiten jeweils derart ausgestaltet, dass Signale auf der zweiten Datenleitung bei einem inaktiven Zustand der jeweiligen Leitungstreibereinheit durch diese Leitungstreibereinheit durchgeleitet werden. Dies bietet den Vorteil, dass bei einem Ausfallen einer Leitungstreibereinheit die weiteren in Serie geschalteten Leitungstreibereinheiten trotzdem Befehle empfangen und auch Signale zurücksenden können. Somit wird die defekte Leitungstreibereinheit lediglich ausgeblendet und entsprechende Signale werden passiv hindurchgeleitet. Folglich erfolgt kein Verarbeiten von Signalen in der defekten Leitungstreibereinheit, wobei diese Leitungstreibereinheit allerdings auch nicht die weitere Kette unterbricht. Somit ist es vorteilhaft, dass bei einer defekten Leitungstreibereinheit lediglich eine Teilkette von mehreren Teilketten ausfällt.

Gemäß einem weiteren Aspekt der vorliegenden Erfindung sind die Ausführungseinheiten jeweils als Leuchtdiode, Motor, Sensor, Temperatursensor, Lichtsensor, Taster oder Schalter ausgestaltet. Dies hat den Vorteil, dass unterschiedliche Ausführungseinheiten vorgesehen werden können, wobei erfindungsgemäß besonders eine Leuchtdiode bevorzugt ist. Die Leuchtdiode kann wiederum einzelne Einheiten aufweisen, die Rot, Grün oder Blau ausstrahlen. Generell ist es jedoch auch möglich, die einzelnen Ausführungseinheiten zu mischen, derart, dass beispielsweise Leuchtdioden vorliegen und innerhalb der gleichen Kette auch Sensoren. Außerdem kann eine Teilkette aus Leuchtdioden gebildet werden und eine andere Teilkette aus Sensoren. Bevorzugt sind jedoch alle Ausführungseinheiten gleich ausgestaltet.

Gemäß einem weiteren Aspekt der vorliegenden Erfindung sind die Ausführungseinheiten eingerichtet, mindestens eine Statusinformation an die Leitungstreibereinheit bereitzustellen. Dies hat den Vorteil, dass die Leitungstreibereinheit anweisen kann, dass ein bestimmter Wert ausgelesen wird, und sodann wird dieser Befehl durch die Teilkette zu der angesprochenen Ausführungseinheit hindurchgeleitet und dieses Ausführungseinheit liefert den angeforderten Wert wieder über die anderen Ausführungseinheiten zurück. Hierbei ist eine bidirektionale Kommunikation besonders vorteilhaft. Die Aufgabe wird auch gelöst durch ein Verfahren zum fehlertoleranten Ansteuern einer Vielzahl von Ausführungseinheiten, aufweisend ein Bereitstellen einer Befehlseinheit, wobei die Vielzahl von Ausführungseinheiten in eine Mehrzahl von jeweils seriellen Teilketten, wobei jede Teilkette mindestens eine Ausführungseinheit entlang einer ersten Datenleitung aufweist, segmentiert wird und jeweils jeder Teilkette eine Leitungstreibereinheit vorgeschaltet wird und die Leitungstreibereinheiten mittels einer zweiten Datenleitung untereinander seriell kommunikativ gekoppelt werden und die erste in Serie geschaltete Leitungstreibereinheit mittels der zweiten Datenleitung mit der Befehlseinheit kommunikativ gekoppelt wird, wobei Signale auf der zweiten Datenleitung mit einer 10-fach größeren Amplitude moduliert werden als Signale auf der ersten Datenleitung.

Erfindungsgemäß ist es besonders vorteilhaft, dass die Systemanordnung strukturelle Merkmale bereitstellt, welche funktional den Verfahrensschritten entsprechen. Ferner werden Verfahrensschritte vorgeschlagen, welche strukturell auch von der Systemanordnung bezüglich der entsprechenden Funktionalität nachgebildet werden können. So dient das Verfahren dem Betreiben der Systemanordnung und die Systemanordnung kann das vorgeschlagene Verfahren ausführen.

Weitere vorteilhafte Ausgestaltungen werden anhand der beigefügten Figuren näher erläutert. Es zeigen:
- Fig. 1:: eine Teilkette, aufweisend einen Mikrocontroller und mehrere in Serie geschaltete Leuchtdiodeneinheiten gemäß dem Stand der Technik;
- Fig. 2A, 2B:: eine Modulation von Daten als Anwendungsbeispiel der vorliegenden Erfindung;
- Fig. 3:: die vorgeschlagene Systemanordnung in einem Blockschaltbild bezüglich eines Aspekts der vorliegenden Erfindung; und
- Fig. 4:: ein Ablaufdiagramm gemäß dem vorgeschlagenen Verfahren zum fehlertoleranten Ansteuern einer Vielzahl von Ausführungseinheiten gemäß einem Aspekt der vorliegenden Erfindung.

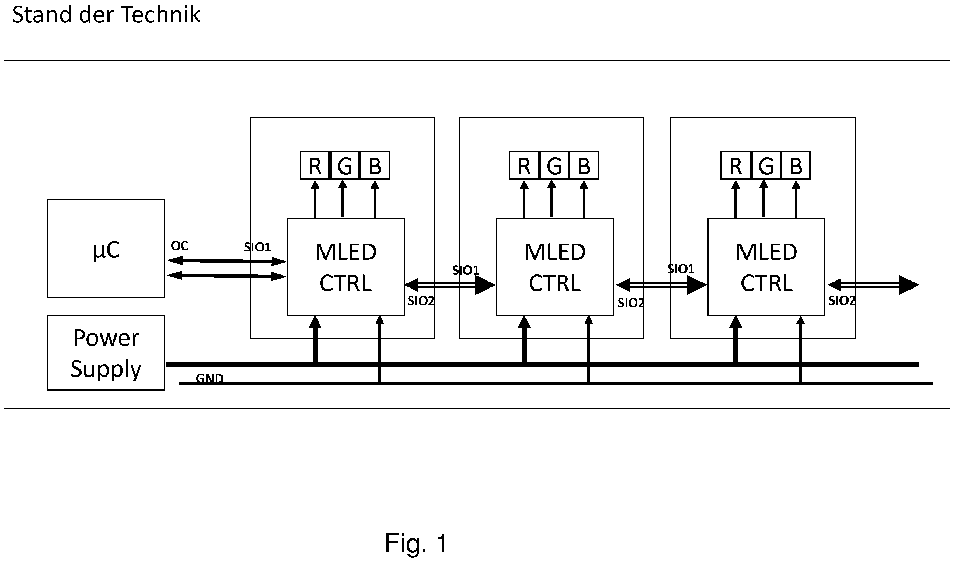

Fig. 1 zeigt auf der linken Seite einen Mikrocontroller, welcher beispielsweise als Befehlseinheit agiert. Darüber hinaus sind mittels einer bidirektionalen Kommunikation mehrere Ausführungseinheiten angeordnet, welche vorliegend als LED-Controller implementiert sind. Dies wird durch das Bezugszeichen MLED CTRL gezeigt. Der Stand der Technik weist bezüglich mancher Anwendungsszenarien den Nachteil auf, dass mit dem Ausfall eines Controllers alle weiteren in Serie geschalteten Controller ebenfalls ausfallen, da die Kommunikation unterbunden ist.

Fig. 1 zeigt eine mögliche Ausgestaltung eines Systems bzw. der Kommunikationsanordnung gemäß Stand der Technik. So ist vorliegend auf der linken Seite die Befehlseinheit ersichtlich, welche an drei Steuereinheiten angeschlossen ist. Da die drei Steuereinheiten in Serie geschaltet sind, ist die Befehlseinheit mit einer Steuereinheit direkt verbunden und den weiteren Steuereinheiten indirekt verbunden. Bei den Steuereinheiten kann es sich um sogenannte Multi-LED-Controller handeln. Dies ist in der vorliegenden Fig. 1 als MLED CTRL eingezeichnet. Durch das einheitliche Bezugszeichen soll insbesondere verdeutlicht werden, dass die Steuereinheiten typischerweise gleich ausgestaltet sind. Wie vorliegend ersichtlich ist, handelt es sich bei den Leuchtdioden um RGB- (also rot, grün, blau) Leuchtdioden. Diese sind hierbei eingerichtet, einen bestimmten Farbwert mittels eines Mischverhältnisses der einzelnen Leuchtdiodeneinheiten einzustellen. Ferner ist in der vorliegenden Figur ersichtlich, dass weitere Komponenten je nach Bedarf vorzusehen sind. Beispielsweise kann es notwendig sein, eine Stromzufuhr bereitzustellen. Hierbei ist es jedoch auch möglich, diese Komponenten, beispielsweise die Stromzufuhr, extern bereitzustellen und lediglich anzuschließen.

Die Datenleitung ist vorliegend als Mehrzahl von Datenleitungssegmenten vorhanden, welche als bidirektionale Pfeile SIO1, SIO2 eingezeichnet sind. Steuereinheiten können auch als Ausführungseinheiten bezeichnet werden. Der MLED Controller kann auch als ISELED Controller bezeichnet werden, wie er erfindungsgemäß als Ausführungseinheit eingesetzt werden kann.

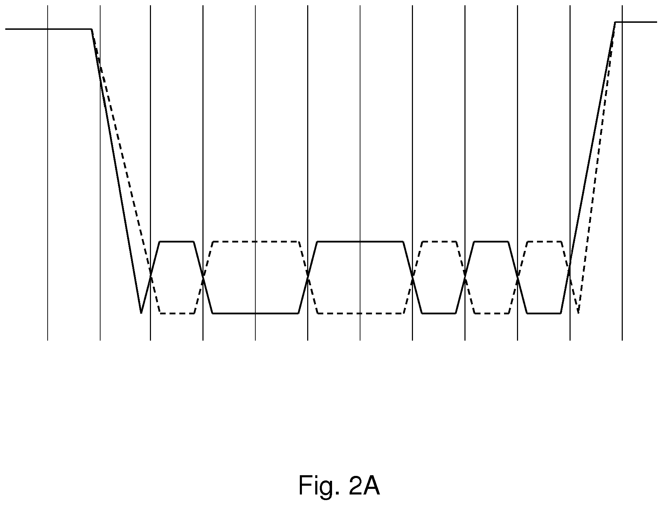

Fig. 2A zeigt eine Modulation von Daten, wobei nur in der aktiven Phase wenn Kommandos übertragen werden die Datenleitungen differentiell moduliert sind. In der inaktiven Phase, wenn also keine Kommandos übertragen werden wird der Strom auf beiden Leitungen abgeschaltet und beide Leitungen "fallen" auf ein nicht differentielles Potential, welches typischerweise durch eine Terminierung vergebenen wird. Beim Übergang von aktiver Phase (differentiell mit hohem Stromverbrauch) zu inaktiver Phase (nicht differenziell, kein Stromverbrauch) kommt es zu einer steilen Flanke. Zudem ist mittels der vertikalen Linien eine Taktung angedeutet, die dazu dient, aus dem Signal eine Semantik auszulesen. Vorzugsweise wird innerhalb der Taktung dann das Signal ausgelesen, falls die Amplitude maximal ausgeschöpft ist, um eine Fehlerrobustheit zu erreichen. Bei den gezeigten Daten kann es sich um Synchronisierungsdaten auf der linken Seite handeln und um ein Kommando auf der rechten Seite.

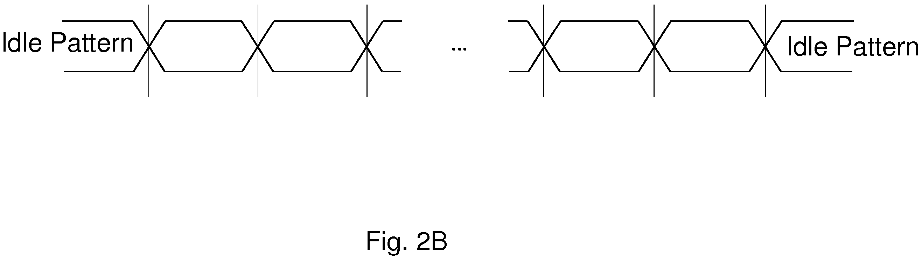

Generell sind die Dimensionen und Inhalte der Fig. 2A und 2B lediglich beispielhaft und schematisch zu verstehen. So können auch andere Modifikationen vorliegen.

Fig. 2A zeigt einen Nachteil im Stand der Technik, nämlich die steile Flanke auf der linken Seite, welche nicht elektromagnetisch verträglich ist. Somit ist eine solche Modulierung für eine Kabelverbindung wenig tauglich. Für eine Leiterplatte ist diese Modulierung geeignet, weshalb lediglich auf der ersten Datenleitung erfindungsgemäß derart gesendet werden kann. Dies ist deshalb der Fall, da hier eine kurze Verbindung vorherrscht und ein Abschirmen möglich ist.

Fig. 2B zeigt ein überlagertes Signal und zeigt folglich zwei Kennlinien. Im Gegensatz zu Figur 2A wird die Datenleitung immer aktiv getrieben. Die Übermittlung des Kommandos erfolgt mit einer Sequenz von Bits, welche differentiell moduliert sind wie bei Figur 2A. Im Gegensatz zu Figur 2A werden die Datenleitungen nach der Übertragung des Kommandos nicht abgeschaltet und senden weiterhin ein differentielles Idle Pattern. Hierbei handelt es sich um einen Aspekt der Datenmodulierung, der auch erfindungsgemäß Einsatz finden kann. Besonders vorteilhaft ist es, dass erfindungsgemäß ohne Anpassung des Senders empfängerseitig nicht nur ein Abtasten an solchen unvorteilhaften Zeitpunkten, also wenn eine Signalstärke nahe dem Schwellwert ist, vermieden wird, sondern ein Abtasten bei eben maximaler Amplitude erfolgt. Dies garantiert einen ausreichenden Abstand der Signalstärke vom Schwellwert zu einem Messzeitpunkt, also dem Abtastzeitpunkt. Der Abtastzeitpunkt ist zeitlich innerhalb einer Bitbreite angeordnet, welche bestimmt innerhalb welcher Zeitspanne das jeweilige zu übertragende Bit kodiert ist. Somit ist also der Abtastzeitpunkt jeweils innerhalb dieser Bitbreite zu wählen und liest jeweils eine Bitbelegung aus. Die einzelnen Bitbreiten, welche den seriellen Bitdatenstrom in einzelne Bits unterteilen sind typischerweise zeitlich äquidistant. Ein Idle Pattern wird auch als Leerlaufmuster bezeichnet.

Bei typischerweise durchgeführten Abtastungen kann es sich um Abtastzeitpunkte zur zeitlichen Mitte einer Bitbreite handeln. So steigt die Signalstärke beispielsweise bei einem Wechsel von einer kodierten Null zu einer kodierten Eins gegen Anfang der Bitbreite, erreicht in etwa in der Mitte der Bitbreite ihr Maximum und fällt danach ab, falls anschließend eine Null kodiert werden soll. Somit kann als ein Referenzpunkt eines geeigneten Abtastzeitpunkts die Mitte einer Bitbreite gewählt werden.

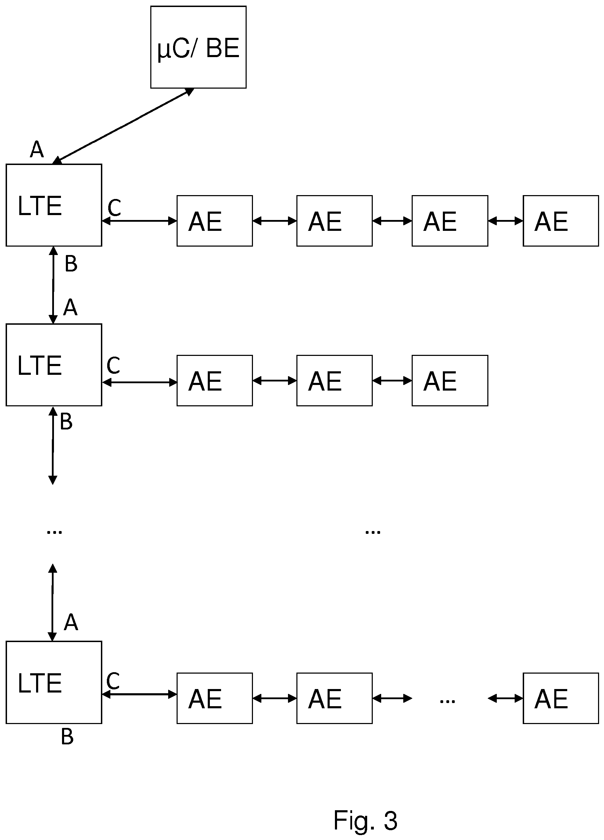

Fig. 3 zeigt den vorgeschlagenen Aufbau einer Systemanordnung, wobei die Befehlseinheit BE als ein Mikrocontroller vorliegt. Diese Befehlseinheit BE ist mit einer Mehrzahl von Leitungstreibereinheiten LTE kommunikativ gekoppelt. Die Befehlseinheit BE ist mittels der zweiten Datenleitung mit den seriell geschalteten Leitungstreibereinheiten LTE verbunden. Hierzu verfügt jede Leitungstreibereinheit LTE über drei Schnittstellen, nämlich Schnittstellen A, B und C. Wie vorliegend eingezeichnet ist, kommuniziert eine Leitungstreibereinheit LTE mit einer Teilkette von Ausführungseinheiten AE. Diese Ausführungseinheiten AE sind ebenfalls in Serie geschaltet und kommunizieren mittels der ersten Datenleitung.

Wie ebenfalls gezeigt ist, liegen mehrere Teilketten vor, wobei jede Teilkette eine Leitungstreibereinheit LTE umfasst und mindestens eine Ausführungseinheit AE. Somit liegen auch mehrere Datenleitungen ersten Typs vor, wobei lediglich drei Teilketten, also drei erste Datenleitungen, eingezeichnet sind.

Das vorgeschlagene System skaliert, was dadurch gekennzeichnet ist, dass zwischen der zweiten Teilkette und der dritten Teilkette Punkte eingezeichnet sind. Diese Punkte verdeutlichen, dass hierbei mehrere Teilketten in unbestimmter Anzahl vorliegen können. Die Anzahl wird lediglich durch den Adressraum beschränkt. Rechts unten in der vorliegenden Fig. 3 ist gezeigt, dass unterschiedlich viele Ausführungseinheiten AE vorzusehen sein können, was ebenfalls durch Punkte angedeutet ist. Auch hier ist der Adressraum ausschlaggebend für die Anzahl der Ausführungseinheiten AE.

In der vorliegenden Fig. 3 ist die jeweils erste Datenleitung horizontal eingezeichnet und die zweite Datenleitung vertikal. Die zweite Datenleitung bezieht sich ebenfalls auf die Verbindung zwischen Befehlseinheit BE und der mehreren Leitungstreibereinheiten LTE. Insgesamt können die horizontalen Teilketten auf einer Leiterplatte jeweils angeordnet werden, während zwischen der vertikalen Verbindung eine Kabelverbindung implementiert werden kann. Somit können vertikal auch größere Distanzen von mehreren Metern überwunden werden. Vertikal und horizontal bezieht sich vorliegend lediglich auf die Figur, wobei der Fachmann erkennt, dass die tatsächliche Implementierung je nach Bedarf erfolgt.

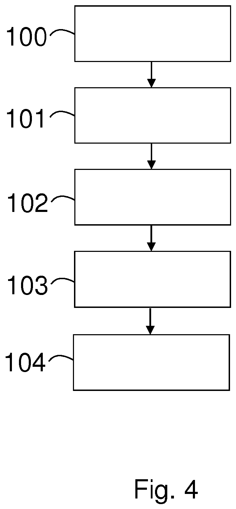

Fig. 4 zeigt in einem schematischen Ausführungsdiagramm ein Verfahren zum fehlertoleranten Ansteuern einer Vielzahl von Ausführungseinheiten AE, aufweisend ein Bereitstellen 100 einer Befehlseinheit BE, wobei die Vielzahl von Ausführungseinheiten AE in eine Mehrzahl von jeweils seriellen Teilketten, wobei jede Teilkette mindestens eine Ausführungseinheit AE entlang einer ersten Datenleitung aufweist, segmentiert wird 101 und jeweils jeder Teilkette einer Leitungstreibereinheit LTE vorgeschaltet wird 102 und die Leitungstreibereinheiten LTE mittels einer zweiten Datenleitung untereinander seriell kommunikativ gekoppelt werden 103 und die erste in Serie geschaltete Leitungstreibereinheit LTE mittels der zweiten Datenleitung mit der Befehlseinheit BE kommunikativ gekoppelt wird 104, wobei Signale auf der zweiten Datenleitung mit einer 10-fach größeren Amplitude moduliert werden als Signale auf der ersten Datenleitung.

## Patentansprüche

1. Systemanordnung zum fehlertoleranten Ansteuern einer Vielzahl von Ausführungseinheiten (AE) der Systemanordnung, aufweisend:
- eine Befehlseinheit (BE) und Leitungstreibereinheiten (LTE), wobei
- die Vielzahl von Ausführungseinheiten (AE) in eine Mehrzahl von jeweils seriellen Teilketten, wobei jede Teilkette mindestens eine Ausführungseinheit (AE) entlang einer ersten Datenleitung aufweist, segmentiert ist und jeweils jeder Teilkette eine Leitungstreibereinheit (LTE) vorgeschaltet ist; und
- die Leitungstreibereinheiten (LTE) mittels einer zweiten Datenleitung untereinander seriell kommunikativ gekoppelt sind und die erste in Serie geschaltete Leitungstreibereinheit (LTE) mittels der zweiten Datenleitung mit der Befehlseinheit (BE) kommunikativ gekoppelt ist, **dadurch gekennzeichnet, dass** die Systemanordnung eingerichtet ist Signale auf der zweiten Datenleitung mit einer 10-fach größeren Amplitude zu modulieren als Signale auf der ersten Datenleitung, wobei bei einem Ansteuern der Vielzahl der Ausführungseinheiten (AE) die Systemanordnung weiterhin dazu eingerichtet ist, stets eine differenzielle Modulation bereitzustellen, so dass die Datenleitungen aktiv gesteuert werden, auch wenn kein Befehl übertragen wird.

2. Systemanordnung nach Anspruch 1, **dadurch gekennzeichnet, dass**
die einer Teilkette vorgeschaltete Leitungstreibereinheit (LTE) für die mindestens eine Ausführungseinheit (AE) dieser Teilkette eingerichtet ist als Master-Einheit zu agieren und die mindestens eine Ausführungseinheit (AE) bezüglich dieser Leitungstreibereinheit (LTE) eingerichtet ist als Slave-Einheit zu agieren.

3. Systemanordnung nach Anspruch 1 oder 2, **dadurch gekennzeichnet, dass** die Befehlseinheit (BE) für die Leitungstreibereinheiten (LTE) eingerichtet ist als Master-Einheit zu agieren und die Leitungstreibereinheiten (LTE) bezüglich der Befehlseinheit (BE) eingerichtet sind als Slave-Einheit zu agieren.

4. Systemanordnung nach einem der vorhergehenden Ansprüche, **dadurch gekennzeichnet, dass** die erste Datenleitung und/ oder die zweite Datenleitung bidirektional ist, wobei für den Fall, dass die erste Datenleitung nicht bidirektional ist die Kommunikationsrichtung von der jeweils einen Leitungstreibereinheit (LTE) zu der mindestens einen Ausführungseinheit (AE) ist und für den Fall, dass die zweite Datenleitung nicht bidirektional ist die Kommunikationsrichtung von der Befehlseinheit (BE) zu den Leitungstreibereinheiten (LTE) ist.

5. Systemanordnung nach einem der vorhergehenden Ansprüche, **dadurch gekennzeichnet, dass** die erste Datenleitung und/ oder die zweite Datenleitung eine optische oder eine elektrische Datenleitung ist.

6. Systemanordnung nach einem der Ansprüche 1 bis 4, **dadurch gekennzeichnet, dass** die erste Datenleitung und/ oder die zweite Datenleitung eine elektrische Datenleitung ist, welche eingerichtet ist stets Strom zu führen.

7. Systemanordnung nach einem der vorhergehenden Ansprüche, **dadurch gekennzeichnet, dass** jeweils eine Leitungstreibereinheit (LTE) mitsamt einer Teilkette auf einer eigenen Leiterplatte angeordnet ist.

8. Systemanordnung nach einem der vorhergehenden Ansprüche, **dadurch gekennzeichnet, dass** die Leitungstreibereinheiten (LTE) jeweils derart ausgestaltet sind, dass Signale auf der zweiten Datenleitung bei einem inaktiven Zustand der jeweiligen Leitungstreibereinheit (LTE) durch diese Leitungstreibereinheit (LTE) durchgeleitet werden.

9. Systemanordnung nach einem der vorhergehenden Ansprüche, **dadurch gekennzeichnet, dass** die Ausführungseinheiten (AE) jeweils als Leuchtdiode, Motor, Sensor, Temperatursensor, Lichtsensor, Taster oder Schalter ausgestaltet sind.

10. Systemanordnung nach einem der vorhergehenden Ansprüche, **dadurch gekennzeichnet, dass** die Ausführungseinheiten (AE) eingerichtet sind mindestens eine Statusinformation an die Leitungstreibereinheiten (LTE) bereitzustellen, für den Fall, dass die erste Datenleitung bidirektional ist.

11. Verfahren zum fehlertoleranten Ansteuern einer Vielzahl von Ausführungseinheiten (AE), aufweisend:
- Bereitstellen (100) einer Befehlseinheit (BE) und Leitungstreibereinheiten,
- Segmentieren (101) der Vielzahl von Ausführungseinheiten (AE) in eine Mehrzahl von jeweils seriellen Teilketten, wobei jede Teilkette mindestens eine Ausführungseinheit (AE) entlang einer ersten Datenleitung aufweist, - Vorschalten (102) jeder Teilkette eine jeweilige Leitungstreibereinheit (LTE),
- seriell kommunikativ Koppeln (103) der Leitungstreibereinheiten (LTE) mittels einer zweiten Datenleitung untereinander, und
- kommunikativ Koppeln (104) der ersten in Serie geschaltete Leitungstreibereinheit (LTE) mittels der zweiten Datenleitung mit der Befehlseinheit (BE), **gekennzeichnet durch**
- Modulieren von Signalen auf der zweiten Datenleitung mit einer 10-fach größeren Amplitude als Signale auf der ersten Datenleitung,
- bei einem Ansteuern der Vielzahl der Ausführungseinheiten (AE) stets eine differenzielle Modulation bereitstellen, so dass die Datenleitungen aktiv gesteuert werden, auch wenn kein Befehl übertragen wird.

## Claims

1. A system arrangement for fault-tolerant control of a plurality of execution units (AE) of the system arrangement, comprising:
- a command unit (BE) and line driver units (LTE), wherein
- the plurality of execution units (AE) is segmented into a plurality of respective serial sub-chains, each sub-chain having at least one execution unit (AE) along a first data line, and a line driver unit (LTE) is connected upstream of each sub-chain; and
- the line driver units (LTE) are serially communicatively coupled to one another by means of a second data line and the first series-connected line driver unit (LTE) is communicatively coupled to the command unit (BE) by means of the second data line, **characterised in that** in that the system arrangement is set up to modulate signals on the second data line with an amplitude 10 times greater than signals on the first data line, the system arrangement furthermore being set up to always provide differential modulation when the plurality of execution units (AE) are actuated, so that the data lines are actively controlled even if no command is transmitted.

2. The system arrangement according to claim 1, **characterised in that** the line driver unit (LTE) connected upstream of a partial chain is set up to act as a master unit for the at least one execution unit (AE) of this partial chain and the at least one execution unit (AE) is set up to act as a slave unit with respect to this line driver unit (LTE).

3. The system arrangement according to claim 1 or 2, **characterised in that** the command unit (BE) is set up to act as a master unit for the line driver units (LTE) and the line driver units (LTE) are set up to act as slave units with respect to the command unit (BE).

4. The system arrangement according to one of the preceding claims, **characterised in that** the first data line and/or the second data line is bidirectional, wherein, in the event that the first data line is not bidirectional, the direction of communication is from the respective line driver unit (LTE) to the at least one execution unit (AE) and, in the event that the second data line is not bidirectional, the direction of communication is from the command unit (BE) to the line driver units (LTE).

5. The system arrangement according to one of the preceding claims, **characterised in that** the first data line and/or the second data line is an optical or an electrical data line.

6. The system arrangement according to one of claims 1 to 4, **characterised in that** the first data line and/or the second data line is an electrical data line which is set up to always carry current.

7. The system arrangement according to one of the preceding claims, **characterised in that** in each case a line driver unit (LTE) together with a partial chain is arranged on a separate printed circuit board.

8. The system arrangement according to one of the preceding claims, **characterised in that** the line driver units (LTE) are each designed in such a way that signals on the second data line are passed through this line driver unit (LTE) when the respective line driver unit (LTE) is in an inactive state.

9. The system arrangement according to one of the preceding claims, **characterised in that** the execution units (AE) are each designed as a light-emitting diode, motor, sensor, temperature sensor, light sensor, button or switch.

10. The system arrangement according to one of the preceding claims, **characterised in that** the execution units (AE) are set up to provide at least one status information to the line driver units (LTE) in the event that the first data line is bidirectional.

11. A method for fault-tolerant control of a plurality of execution units (AE), comprising:
- Providing (100) a command unit (BE) and line driver units,
- Segmenting the plurality of execution units (AE) into a plurality of respective serial sub-chains, each sub-chain having at least one execution unit (AE) along a first data line,
- Connect a respective line driver unit (LTE) upstream (102) of each sub-chain,
- serial communicative coupling (103) of the line driver units (LTE) with each other by means of a second data line and
- Communicative coupling (104) of the first series-connected line driver unit (LTE) to the command unit (BE) by means of the second data line, **characterised by**
- modulate signals on the second data line with an amplitude 10 times greater than signals on the first data line,
- always provide differential modulation when activating the large number of execution units (AE), so that the data lines are actively controlled even if no command is being transmitted.

## Revendications

1. Agencement de système pour la commande tolérante aux défauts d'une pluralité d'unités d'exécution (AE) de l'agencement de système, présentant :
- une unité de commande (BE) et des unités de commande de ligne (LTE), où
- la pluralité d'unités d'exécution (AE) est segmentée en une pluralité de sous-chaînes sérielles respectives, chaque sous-chaîne comportant au moins une unité d'exécution (AE) le long d'une première ligne de données, et une unité d'attaque de ligne (LTE) est respectivement placée en amont de chaque sous-chaîne ; et
- les unités de commande de ligne (LTE) sont couplées en communication en série entre elles au moyen d'une deuxième ligne de données et la première unité de commande de ligne (LTE) montée en série est couplée en communication avec l'unité de commande (BE) au moyen de la deuxième ligne de données, **caractérisé en ce que en ce que** l'agencement de système est agencé pour moduler des signaux sur la deuxième ligne de données avec une amplitude 10 fois plus grande que des signaux sur la première ligne de données, l'agencement de système étant en outre agencé, lors d'une commande de la pluralité d'unités d'exécution (AE), pour fournir toujours une modulation différentielle, de sorte que les lignes de données sont commandées activement, même si aucune commande n'est transmise.

2. Agencement de système selon la revendication 1, **caractérisé en ce que** l'unité d'attaque de ligne (LTE) placée en amont d'une cha ne partielle est conçue pour agir en tant qu'unité maître pour l'au moins une unité d'exécution (AE) de cette cha ne partielle et l'au moins une unité d'exécution (AE) est conçue pour agir en tant qu'unité esclave par rapport à cette unité d'attaque de ligne (LTE).

3. Agencement de système selon la revendication 1 ou 2, **caractérisé en ce que** l'unité de commande (BE) est agencée pour agir en tant qu'unité maître pour les unités de commande de ligne (LTE) et les unités de commande de ligne (LTE) sont agencées pour agir en tant qu'unité esclave par rapport à l'unité de commande (BE).

4. Agencement de système selon l'une des revendications précédentes, **caractérisé en ce que** la première ligne de données et/ou la deuxième ligne de données est bidirectionnelle, dans lequel, dans le cas où la première ligne de données n'est pas bidirectionnelle, la direction de communication est de l'unité de commande de ligne (LTE) respective vers l'au moins une unité d'exécution (AE) et, dans le cas où la deuxième ligne de données n'est pas bidirectionnelle, la direction de communication est de l'unité de commande (BE) vers les unités de commande de ligne (LTE).

5. Agencement de système selon l'une quelconque des revendications précédentes, **caractérisé en ce que** la première ligne de données et/ou la deuxième ligne de données est une ligne de données optique ou électrique.

6. Agencement de système selon l'une quelconque des revendications 1 à 4, **caractérisé en ce que** la première ligne de données et/ou la deuxième ligne de données est une ligne de données électrique qui est toujours adaptée pour conduire du courant.

7. Agencement de système selon l'une des revendications précédentes, **caractérisé en ce que** chaque unité de commande de ligne (LTE) est disposée avec une chaîne partielle sur sa propre carte de circuit imprimé.

8. Agencement de système selon l'une des revendications précédentes, **caractérisé en ce que** les unités de commande de ligne (LTE) sont respectivement configurées de telle sorte que des signaux sur la deuxième ligne de données sont transmis par cette unité de commande de ligne (LTE) lorsque l'unité de commande de ligne (LTE) respective est dans un état inactif.

9. Agencement de système selon l'une quelconque des revendications précédentes, **caractérisé en ce que** les unités d'exécution (AE) sont chacune conçues comme une diode électroluminescente, un moteur, un capteur, un capteur de température, un capteur de lumière, un bouton-poussoir ou un interrupteur.

10. Agencement de système selon l'une quelconque des revendications précédentes, **caractérisé en ce que** les unités d'exécution (AE) sont agencées pour fournir au moins une information d'état aux unités de commande de ligne (LTE), dans le cas où la première ligne de données est bidirectionnelle.

11. Procédé de commande à tolérance de panne d'une pluralité d'unités d'exécution (AE), comprenant :
- fournir (100) une unité de commande (BE) et des unités de commande de ligne,
- segmenter la pluralité d'unités d'exécution (AE) en une pluralité de sous-chaînes sérielles respectives, chaque sous-chaîne comprenant au moins une unité d'exécution (AE) le long d'une première ligne de données,
- en amont (102) de chaque chaîne partielle, une unité d'attaque de ligne (LTE) respective,
- le couplage (103) en communication sérielle des unités de commande de ligne (LTE) entre elles au moyen d'une deuxième ligne de données et
- le couplage par communication (104) de la première unité de commande de ligne (LTE) connectée en série à l'unité de commande (BE) au moyen de la seconde ligne de données, **caractérisé par**
- moduler les signaux sur la deuxième ligne de données avec une amplitude 10 fois supérieure à celle des signaux sur la première ligne de données,
- lors d'une commande de la pluralité d'unités d'exécution (AE), fournir toujours une modulation différentielle, de sorte que les lignes de données soient commandées activement, même si aucune commande n'est transmise.
